(19) Europäisches Patentamt
European Patent Office
Office européen des brevets

(11) Veröffentlichungsnummer: **0 470 456 B1**

# (12) EUROPÄISCHE PATENTSCHRIFT

(45) Veröffentlichungstag der Patentschrift: **21.12.94**

(51) Int. Cl.[5]: **C08L 51/04**, C08L 71/12, //(C08L51/04,71:12)

(21) Anmeldenummer: **91112582.1**

(22) Anmeldetag: **26.07.91**

## (54) Thermoplastische Formmassen auf Basis von Polyphenylenethern und schlagfest modifiziertem Polystyrol.

(30) Priorität: **06.08.90 DE 4024870**

(43) Veröffentlichungstag der Anmeldung: **12.02.92 Patentblatt 92/07**

(45) Bekanntmachung des Hinweises auf die Patenterteilung: **21.12.94 Patentblatt 94/51**

(84) Benannte Vertragsstaaten: **BE DE FR GB IT NL**

(56) Entgegenhaltungen:
**EP-A- 0 050 261**
**EP-A- 0 240 905**
**EP-A- 0 295 675**

(73) Patentinhaber: **BASF Aktiengesellschaft**
**Carl-Bosch-Strasse 38**
**D-67063 Ludwigshafen (DE)**

(72) Erfinder: **Zeltner, Doris, Dr.**
**Otto-Stabel-Strasse 4**
**W-6700 Ludwigshafen (DE)**
Erfinder: **Blumenstein, Uwe, Dr.**
**Ganderhofstrasse 2**
**W-6700 Ludwigshafen (DE)**
Erfinder: **Klaerner, Peter, Dr.**
**Hauptstrasse 62**
**W-6719 Battenberg (DE)**
Erfinder: **Muehlbach, Klaus, Dr.**
**Dr.-Heinrich-Winter-Strasse 19**
**W-6148 Heppenheim (DE)**

**EP 0 470 456 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft thermoplastische Formmassen auf Basis von Polyphenylenethern und schlagfest modifiziertem Polystyrol, enthaltend als wesentliche Komponenten

(A) 5 bis 95 Gew.-% eines Polyphenylenethers und

(B) 5 bis 95 Gew.-% einer schlagzäh modifizierten polymeren Masse, erhältlich durch Polymerisation von

(a) 70 bis 97 Gew.-Teilen Styrol und/oder einem alkylsubstituierten Styrol in Gegenwart von

(b) 3 bis 30 Gew.-Teilen eines kautschukartigen Polymeren, welches zu 60 bis 100 Gew.-% aus einem oder mehreren konjugierten Dienen und zu 0 bis 40 Gew.-% aus einem oder mehreren Vinylaromaten aufgebaut ist, ein Molekulargewicht von 20 000 bis 200 000 hat und pro Gramm $5{,}0 \cdot 10^{-6}$ bis $2{,}5 \cdot 10^{-4}$ mol Thiolgruppen enthält, die durch polymeranaloge Umsetzung in das Polymere eingeführt wurden, wobei bis zu 70 Gew.-% dieses thiolgruppenhaltigen Polymeren durch ein thiolfreies kautschukartiges Polymeres oder mehrere thiolfreie kautschukartige Polymere ähnlicher Art ersetzt sein können.

Aus den US-A 3 583 435 und 4 128 602 sind thermoplastische Formmassen aus Polyphenylenethern und schlagfest modifizierten Styrolpolymerisaten bekannt, die gegenüber reinen Polyphenylenether-Thermoplasten eine verbesserte Verarbeitbarkeit und eine erhöhte Zähigkeit aufweisen.

Des weiteren sind aus den DE-A 19 32 234 und 25 23 101 thermoplastische Formmassen aus Polyphenylenethern und Styrol-Butadien-Copolymerisaten mit guter Schlag- und Zugfestigkeit bekannt.

Nachteilig ist jedoch die noch mangelhafte Thermooxidationsbeständigkeit dieser bekannten Massen.

Aufgabe der vorliegenden Erfindung war es deshalb, diesem Mangel abzuhelfen.

Demgemäß wurden die eingangs definierten thermoplastischen Formmassen gefunden.

Im einzelnen haben die Komponenten in den erfindungsgemäßen Formmassen die folgende Bedeutung:

Komponente A:

Die in Betracht kommenden Polyphenylenether (PPE) sind bekannt; sie werden aus Phenol, das vorzugsweise in ortho-Stellung ein- oder zweifach durch Alkyl, Alkoxy, Chlor oder Brom substituiert ist, z.B. durch oxidative Kupplung, hergestellt (vgl. US-A 3 661 848, 3 378 505, 3 306 874, 3 306 875 und 3 639 656). Die Alkyl- oder Alkoxygruppen, die bevorzugt 1 bis 4 C-Atome enthalten, können ihrerseits durch Chlor oder Brom substituiert sein. Geeignete Polyphenylenether leiten sich beispielsweise ab von 2,6-Diethylphenol, 2-Methyl-6-ethyl-phenol, 2-Methyl-6-propyl-phenol, 2,6-Dipropyl-phenol, 2-Ethyl-6-propyl-phenol, 2,6-Dichlor-phenol und 2,6-Dibrom-phenol oder von deren Mischungen untereinander oder z.B. mit 2,3,6-Trimethylphenol. Als Komponente A kann auch ein Gemisch verschiedener Polyphenylenether verwendet werden. Besonders geeignet ist Poly-2,6-dimethyl-1,4-phenylen-ether. Bevorzugt sind solche Polyphenylenether, die eine Grenzviskosität von 0,3 bis 0,7 dl/g (gemessen in Chloroform bei 25 °C) aufweisen.

Komponente B:

Hierbei handelt es sich um eine schlagzäh modifizierte polymere Masse, (high impact polystyrene = HIPS) hergestellt durch Polymerisation von

(a) 70 bis 97 Gew.-Teilen, bevorzugt 80 bis 95 Gew.-Teilen, Styrol und/oder einem am Ring oder an der Vinylgruppe alkylsubstituierten Styrol wie p-Methylstyrol und $\alpha$-Methylstyrol, besonders bevorzugt Styrol, in Gegenwart von

(b) 3 bis 30 Gew.-Teilen, bevorzugt 5 bis 20 Gew.-Teilen, mindestens eines kautschukartigen Polymeren mit einem mittleren Molekulargewicht von 20 000 bis 200 000, bevorzugt 30 000 bis 100 000, das zu 60 bis 100 Gew.% aus konjugierten Dienen und zu 0 bis 40 Gew.-% aus Vinylaromaten aufgebaut ist und $5{,}0 \cdot 10^{-6}$ bis $2{,}5 \cdot 10^{-4}$ mol Thiolgruppen pro Gramm Kautschuk enthält. Geeignet sind Homopolymerisate aus Dienen mit 4 bis 5 C-Atomen wie Butadien und Isopren oder Copolymerisate mit bis zu 40 Gew.-% eines oder mehrerer Vinylaromaten wie Styrol, $\alpha$-Methylstyrol und p-Methylstyrol. Besonders bevorzugt sind Polymere, die sich überwiegend vom Butadien ableiten.

Die kautschukartigen Polymeren sind bekannt und können beispielsweise nach den in den DE-A 28 13 328, US-A 3 755 269, GB-A 1 432 782 und GB-A 1 432 783 beschriebenen Methoden hergestellt werden. Man stellt sie vorzugsweise durch anionische Polymerisation der konjugierten Diene in einem inerten Lösungsmittel, z.B. einem Kohlenwasserstoff wie n-Hexan und Cyclohexan, her, wobei sich als Initiator eine organische mono- oder bifunktionelle Lithiumverbindung, insbesondere sec.-Butyllithium empfiehlt. Bei diesem Verfahren werden primär Polymerisate mit anionischen Endgruppen (und Lithiumkationen als

Gegenionen) erhalten.

In diese Dienpolymerisate bzw. Copolymerisate werden die Thiolgruppen in an sich bekannter Weise durch polymeranaloge Umsetzung mit Thiiranen wie Ethylensulfid und Propylensulfid und anschließender Hydrolyse eingeführt:

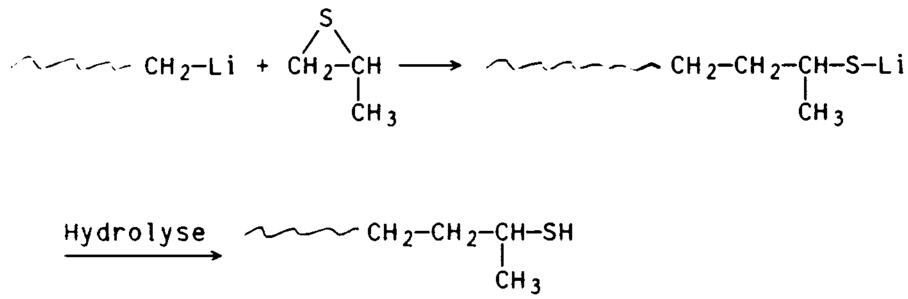


Bei Verwendung von bifunktionellen Startern für die Polymeristion werden entsprechend Kautschuke mit Thiolgruppen an beiden Enden der Kette erhalten.

Eine andere Möglichkeit zur Einführung von Thiolgruppen in den Kautschuk besteht darin, die Polymeren in an sich bekannter Weise [vgl. Tate et al.: "Metallation of unsaturated polymers and formation of graft polymers", in J. of Pol. Sc. Part A-1, Vol. 9, 139 (1971)] nachträglich zu metallieren, beispielsweise mit Lithium, und die auf diese Weise erhaltenen, statistisch im Polymeren verteilten, anionischen Gruppen mit den Thiiranen in Thiol-Endgruppen zu überführen.

Für die Komponente B der erfindungsgemäßen Formmassen sind diejenigen kautschukartigen Polymeren besonders bevorzugt, die nur eine endständige Thiolgruppe aufweisen.

Allgemein können aber auch Mischungen verschiedener kautschukartiger Polymerer verwendet werden, sofern der Anteil der Thiolgruppen enthaltenden Polymeren an der Gesamtmenge an kautschukartigen Polymeren mindestens 30 Gew.-% beträgt. Geeignete kautschukartige Mischungspartner sind nichtmodifizierte Kautschuke wie Polybutadien und Isopren mit einem Molekulargewicht von 120 000 bis 400 000.

Die Herstellung der Komponente B erfolgt bevorzugt durch Polymerisation von Styrol und/oder einem alkyl- oder halogen-substituierten Styrol in Gegenwart eines kautschukartigen Polymeren oder Polymerengemisches, wobei ein Teil des Styrols auf den Kautschuk aufpfropft. Verfahren dieser Art sind aus DE-A 1 769 118, DE-A 1 770 392, EP-A 21 488, EP-A 240 903 und EP-A 240 905 bekannt. Die Polymerisation kann thermisch oder mit Hilfe von radikalischen Polymerisationsinitiatoren, mit oder ohne Lösungsmittel, kontinuierlich oder diskontinuierlich, durchgeführt werden, wobei als Polymerisationstechniken vor allem die Substanzpolymerisation und die Suspensionspolymerisation in Betracht kommen. Bevorzugt wendet man zunächst die Substanzpolymerisation an und setzt die Polymerisation in einem fortgeschrittenen Stadium als Suspensionspolymerisation fort.

Für die Polymerisation in Lösung sind als Lösungsmittel insbesondere Methylethylketon und aromatische Kohlenwasserstoffe wie Toluol, Xylol und bevorzugt Ethylbenzol geeignet, wobei sich eine Lösungsmittelmenge von 2 bis 25 Gew.-%, bezogen auf die Menge an Monomeren, empfiehlt. Je nach der gewählten Reaktionsdauer, die im allgemeinen 5 bis 20 Stunden beträgt, und der Menge des Starters, sind in aller Regel 70 bis 95 %, insbesondere 80 bis 90 %, der Monomeren umgesetzt.

Im Falle der Anwendung der Substanzpolymerisation und der daran anschliessenden Suspensionspolymerisation wird üblicherweise ohne Lösungsmittel bis zu einem Umsatz von 20 bis 40 % polymerisiert, wonach man die Polymerisation anschließend in wäßriger Phase zu Ende führt. Die wäßrige Phase enthält bei diesem Verfahren in der Regel 0,05 bis 2 Gew.-% (bezogen auf die Gesamtmenge der Suspension) an Dispergiermitteln, insbesondere wasserlöslichen Dispergiermitteln wie Methylcellulose, Oxypropylcellulose, Polyvinylalkohol und Polyvinylpyrrolidon sowie an wasserunlöslichen anorganischen Suspensionsstabilisatoren, beispielsweise Magnesiumsilikate, Kaolin, Bariumsulfat und Aluminiumhydroxide. Je nach der gewählten Reaktionsdauer, die normalerweise zwischen 8 bis 21 Stunden beträgt, sind etwa 95 bis 99,95 % der Monomeren umgesetzt.

Als Polymerisationsinitiatoren eignen sich beispielsweise Alkyl-, Acylperoxide, Hydroperoxide, Perester und Peroxicarbonate. Besonders bevorzugt verwendet man Dibenzoylperoxid, tert.-Butylperoxi-2-ethylhexanoat oder tert.-Butylperbenzoat, da sie das Aufpfropfen von Styrol auf den Kautschuk erleichtern. Normalerweise ist eine Initiatormenge von 0,02 bis 0,2 Gew.-%, bezogen auf die Menge an Monomeren, ausreichend, wobei der Zerfall der Initiatoren durch Zusatz von Aminen oder Erhöhung der Temperatur beschleunigt werden kann.

Vorzugsweise verwendet man bei der Polymerisation Molekulargewichtsregler, z.B. $C_4$-$C_{18}$-Alkylthiole wie insbesondere n-Butylmercaptan, n-Octylmercaptan, n- und tert.-Dodecylmercaptan, die durch Kettenabbruch zu Polymeren mit definiertem Molekulargewicht führen. Im allgemeinen genügt ein Zusatz von 0,01 bis 0,3 Gew.-% an Alkylthiolen, bezogen auf die Menge der Monomeren.

Die Reaktionstemperatur liegt normalerweise zwischen 50 und 200 °C, insbesondere zwischen 60 und 150 °C, wobei die Polymerisation isotherm oder vorzugsweise bei allmählich steigender Temperatur durchgeführt werden kann.

Zweckmäßigerweise arbeitet man bei Normaldruck. Höherer oder niederer Druck sind möglich, bringen im allgemeinen aber keine Vorteile.

Bei der Substanzpolymerisation bilden sich in der Regel 2 Phasen aus, und zwar eine kohärente Kautschuk-Styrol- und eine nicht-kohärente Polystyrol-Styrol-Phase. Mit Fortschreiten der Reaktion tritt normalerweise (wie es erwünscht ist) Phaseninversion ein, wobei die Polystyrolphase kohärent wird. In diesem Reaktionsabschnitt beeinflußt die Rührgeschwindigkeit den Teilchendurchmesser der im Endprodukt (Komponente B) dispergierten Kautschukphase. Solche Vorgänge sind bekannt und werden beispielsweise von A. Echte [Angew. Makromol. Chemie 58/59, 175 (1977)] beschrieben. Die hierfür erforderlichen Scherbedingungen sind beispielsweise abhängig von der Reaktorgröße, vom Füllgrad des Reaktors, von der Art der Füllung, von der Viskosität der Mischung und von der Art des Rührgerätes. Hinweise zur Ermittlung der jeweils benötigten Scherbedingungen sind den Publikationen von M.H. Pahl ["Grundlagen des Mischens" in: "Kunststofftechnik, Mischen von Kunststoffen", VDI-Verlag GmbH Düsseldorf 1983, S. 1-72] und Freeguard ["Structural Control of Rubber Modified Thermoplastic as Produced by the Mass Process" in: Br. Polym. J. 6, 205 (1974)] zu entnehmen.

Die nach den vorstehend beschriebenen Verfahren erhaltene Komponente B besteht aus Polystyrol, das die Hartmatrix bildet und in feiner Verteilung eine Weichphase (Propfpolymerisat von Styrol auf das kautschukartige Polymere) enthält. Zur Untersuchung von Verteilung, Größe und Art [Kapsel-oder Zellteilchen, vgl. A. Echte, Angew. Makromol. Chemie 58/59, 175 (1977)] der Weichphase sind beispielsweise Elektronenmikroskop-Aufnahmen von Dünnschnitten geeignet.

Vorteilhaft werden die Scherbedingungen so gewählt, daß die in der Polystyrol-Hartmatrix dispergierte Kautschukphase einen mittleren (Volumenmittel) Teilchendurchmesser von 0,1 bis 7 µm, bevorzugt 0,1 bis 2 µm, insbesondere 0,1 bis 0,8 µm, aufweist.

Im Verlauf oder nach Beendigung der Polymerisation der Komponente B können übliche Zuschlagstoffe wie Schmier- und Gleitmittel (insbesondere Weißöle), Entformungsmittel und Antoxidantien zugesetzt werden.

Die Aufarbeitung des modifizierten Styrol-Polymerisates erfolgt in an sich bekannter Weise, z.B. durch Entfernen des monomeren Styrols und des Lösungsmittels in einem Entgasungsextruder bei einer Temperatur zwischen 180 und 280 °C und einem Druck zwischen 1 und 30 mbar.

Die Herstellung der erfindungsgemäßen thermoplastischen Formmassen erfolgt anschließend in an sich bekannter Weise durch intensive Durchmischung der Komponenten A und B bei einer Temperatur zwischen vorzugsweise 200 und 320 °C, insbesondere 250 bis 300 °C, in hierfür üblichen Mischvorrichtungen wie Knetern, Banbury-Mischern, Einschneckenextrudern und insbesondere in Zweischneckenextrudern. Die Verweilzeiten betragen im allgemeinen 0,5 bis 30 Minuten, bevorzugt 1 bis 5 Minuten. Je nach Bedarf können die Formmassen z.B. zu Granulaten, Pulvern, Preßlingen, Platten oder Bahnen verarbeitet werden.

Vor oder während des Mischens der Komponenten A und B können noch übliche Zuschlagstoffe, beispielsweise mineralische Verstärkungsmaterialien wie Glasperlen, Mineralfasern, Whisker, Glimmer und insbesondere Glasfasern, des weiteren Hitze- und Lichtstabilisatoren, Gleit- und Entformungsmittel, Färbemittel wie Farbstoffe und Pigmente sowie Flammschutzmittel, insbesondere phosphorhaltige Flammschutzmittel wie Phosphorsäureester, Phosphinsäureester und Phosphinoxide zugesetzt werden. Gute Flammhemmung wird mit Triphenylphosphat und Triphenylphosphinoxid erzielt.

Der Anteil an Zuschlagstoffen in den thermoplastischen Formmassen kann bis zu 30 Gew.-%, insbesondere bis zu 10 Gew.-%, betragen.

Durch das Einbringen von weiteren kautschukartigen Polymeren oder Copolymeren wie elastomeren Styrol-Butadien-Blockkautschuken (Komponente C) kann eine zusätzliche Schlagzähmodifikation erreicht werden. Die erfindungsgemäßen thermoplastischen Formmassen eignen sich zur Herstellung von verschiedenen Formteilen, z.B. durch Spritzguß oder Extrudieren, sowie zur Herstellung von Folien und Halbzeug im Tiefzieh- oder Blasverfahren.

Die thermoplastischen Formmassen bzw. die aus ihnen hergestellten Produkte zeigen gute Thermooxidationsbeständigkeit bei ausgezeichneter Schlagzähigkeit.

Beispiele

Die Formmassen wurden durch Mischen der Komponenten A und B, gegebenenfalls zusammen mit einer zusätzlichen schlagzäh modifizierenden, kautschukartigen Komponente, in einem Extruder hergestellt und bei 280 °C spritzgegossen.

Als Komponente A (PPE) diente ein Poly-2,6-dimethyl-1,4-phenylenether mit einer Grenzviskosität von 0,50 dl/g (gemessen in $CHCl_3$ bei 25 °C).

Als Komponente B (HIPS) dienten kautschukmodifizierte Polystyrole. Zur Herstellung der Komponenten B wurde Styrol in Gegenwart folgender Kautschuke polymerisiert:

1) Polybutadien ($\overline{M}_n$ = 60 000; Endgruppe $-CH_2-CH(CH_3)-SH$);
2) Polybutadien ($\overline{M}_n$ = 160 000; Endgruppe $-CH_2-CH(CH_3)-SH$);
3) Styrol-Butadien-Blockcopolymer ($\overline{M}_n$ = 240 000; 40 % Styrolanteil, davon 33 % Blockstyrol; Molekulargewicht des Styrolblocks 80 000);
4) Polybutadien ($\overline{M}_n$ = 120 000; ohne SH-Gruppen).

Herstellung der Komponenten B:

Eine Mischung aus 7,9 Gew.-% des jeweiligen kautschukartigen Polymeren 1) bis 4), 2,3 Gew.-% eines Weißöls (als Gleitmittel) und 89,8 Gew.-% Styrol wurde mit 0,12 Gew.-% (bezogen auf das Gewicht der Mischung) eines sterisch gehinderten Styrols (als Stabilisator) versetzt und in einem 5 l-Gefäß in Gegenwart von 0,1 Gew.-% tert.-Dodecylmercaptan bei 123 °C bzw. in Gegenwart von 0,1 Gew.-% Benzoylperoxid bei 86 °C jeweils isotherm bis zu einem Umsatz von 35 % polymerisiert. Während der Polymerisation wurde die Mischung mittels Anker-Rührer gerührt, wobei die Rührgeschwindigkeit 200 Umdrehungen pro Minute betrug.

Anschließend wurden noch 0,1 Gew.-% Dicumylperoxid und pro Kilogramm der erhaltenen Reaktionsmischung 900 ml Wasser, sowie 9,0 g eines Dispergierhilfsmittels auf der Basis von Polyvinylpyrrolidon und 18 g Natriumphosphat in das 5 l-Reaktionsgefäß gegeben, wodurch sich ein Füllgrad von 90 % ergab. Dann wurde mit einer Rührgeschwindigkeit von 300 Umdrehungen pro Minute 3 Stunden bei 110 °C, 3 Stunden bei 130 °C und schließlich 4 Stunden bei 140 °C polymerisiert, bis ein Styrolumsatz von 99,95 % erreicht war. Das perlenförmige Produkt wurde abfiltriert, mit Wasser gewaschen und bei 60 °C und 18 mbar Druck getrocknet.

Als zusätzliche schlagzäh modifizierende Komponente C diente ein hydrierter, symmetrischer Styrol-Butadien-Styrol-Blockkautschuk ($\overline{M}_n$ = 105 000, Styrolgehalt 30 %).

Die mittlere Teilchengröße $d_{50}$ (Gewichtsmittel) der dispersen Kautschukphase wurde durch Auszählen und Mitteln von Teilchen gleicher Größenklasse (bei jeweils konstanter Intervallbreite) aus elektronenmikroskopischen Dünnschichtaufnahmen bestimmt. Aus den Volumina der Teilchen (aus der 3. Potenz des scheinbaren Durchmessers) innerhalb der Intervalle kann eine Verteilungssummenkurve bestimmt werden, wobei sich bei einem Ordinatenwert von 50 % auf der Abszisse der Äquivalentdurchmesser ergibt. Die in der nachstehenden Tabelle angegebenen mittleren Durchmesser stellen einen Mittelwert von mindestens 5 000 Teilchen dar.

Die Thermooxidationsbeständigkeit wurde in einem Durchstoßtest ermittelt. Zu diesem Zwecke wurden Probekörper 7 Tage bzw. 14 Tage in einem Umluft-Trockenschrank bei 110 °C gelagert, wonach die Durchstoßarbeit $W_{ges}$ nach DIN 53 443 bestimmt wurde. Als Vergleich dienten Probekörper, die keiner Wärmelagerung unterzogen wurden.

Weiterhin wurden folgende Parameter ermittelt:

- die Vicattemperatur VST/B nach DIN 53 460;
- die Kerbschlagzähigkeit $a_k$ nach DIN 53 453.

Die nachstehende Tabelle zeigt die Zusammensetzung der Formmassen und die jeweiligen dazugehörigen physikalischen Parameter.

Tabelle

| Beispiel-Nr. | Komponente A [Gew.-%] (PPE) | Komponente B [Gew.-%] (HIPS) | Komponente C**) [Gew.-%] | Weichphase $d_{50}$-Wert [µm] | VST/B [°C] | $a_K$ [kJ/m2] | Durchstoßarbeit***) [Nm] | (7d) [Nm] | (14d) [Nm] |
|---|---|---|---|---|---|---|---|---|---|
| 1 | 45 | (1)*) 52 | 3 | 0,4 | 136 | 14,5 | 59 | 39 | 31 |
| 2 (Vergleich) | 45 | (3) 52 | 3 | 0,4 | 137 | 13,7 | 53 | 33 | 29 |
| 3 (Vergleich) | 45 | (4) 52 | 3 | 1,9 | 134 | 12,5 | 46 | 27 | 18 |
| 4 | 40 | (2) 60 | - | 2,0 | 129 | 13,1 | 49 | 23 | 19 |
| 5 (Vergleich) | 40 | (3) 60 | - | 0,4 | 130 | 11,5 | 47 | 20 | 18 |
| 6 (Vergleich) | 40 | (4) 60 | - | 1,9 | 127 | 10,3 | 43 | 15 | 13 |

*) verwendete Kautschukart

**) zusätzlicher schlagzäh modifizierender Kautschuk

***) Durchstoßarbeit ohne Temperaturlagerung, nach 7 Tagen bei 110°C bzw. nach 14 Tagen bei 110°C

Aus der Tabelle ist zu erkennen, daß die erfindungsgemäßen Formmassen (Beispiele 1 und 4) jeweils bessere Werte für die Kerbschlagzähigkeit $a_k$ und die Durchstoßarbeit aufweisen als die vergleichbaren Formmassen 2 und 3 bzw. 5 und 6, die keine kautschukartigen Polymeren mit Thiolgruppen in der Komponente B enthalten.

## Patentansprüche

1. Thermoplastische Formmassen auf Basis von Polyphenylenethern und schlagfest modifiziertem Polystyrol, enthaltend als wesentliche Komponenten
   (A) 5 bis 95 Gew.-% eines Polyphenylenethers und
   (B) 5 bis 95 Gew.-% einer schlagzäh modifizierten polymeren Masse, erhältlich durch Polymerisation von
      (a) 70 bis 97 Gew.-Teilen Styrol und/oder einem alkylsubstituierten Styrol in Gegenwart von
      (b) 3 bis 30 Gew.-Teilen eines kautschukartigen Polymeren, welches zu 60 bis 100 Gew.-% aus einem oder mehreren konjugierten Dienen und zu 0 bis 40 Gew.-% aus einem oder mehreren Vinylaromaten aufgebaut ist, ein Molekulargewicht von 20 000 bis 200 000 hat und pro Gramm $5{,}0 \cdot 10^{-6}$ bis $2{,}5 \cdot 10^{-4}$ mol Thiolgruppen enthält, die durch polymeranaloge Umsetzung in das Polymere eingeführt wurden,
      wobei bis zu 70 Gew.-% dieses thiolgruppenhaltigen Polymeren durch ein thiolfreies kautschukartiges Polymeres oder mehrere thiolfreie kautschukartige Polymere ähnlicher Art ersetzt sein können.

2. Thermoplastische Formmassen nach Anspruch 1, wobei die kautschukartigen Polymerpartikel (Komponente B/b) einen mittleren Teilchendurchmesser von 0,1 bis 7 µm aufweisen.

3. Mischungen, enthaltend 80 bis 100 Gew.-% thermoplastische Formmassen gemäß Anspruch 1 oder 2 und 0 bis 20 Gew.-% eines üblichen elastomeren Blockkautschukes (Komponente C).

## Claims

1. A thermoplastic molding composition based on a polyphenylene ether and on a polystyrene modified to be impact resistant, containing as essential components
   (A) from 5 to 95% by weight of a polyphenylene ether and
   (B) from 5 to 95% by weight of a polymeric composition which has been modified to be impact resistant and can be obtained by polymerization of
      (a) from 70 to 97 parts by weight of styrene and/or an alkyl-substituted styrene in the presence of
      (b) from 3 to 30 parts by weight of a rubber-like polymer of which from 60 to 100% by weight is composed of one or more conjugated dienes and from 0 to 40% by weight is composed of one or more vinylaromatics, which has a molecular weight of from 20,000 to 200,000 and contains $5.0 \times 10^{-6}$ to $2.5 \times 10^{-4}$ mol of mercapto groups per gram, which are introduced into the polymer by reaction thereof, it being possible to replace up to 70% by weight of this polymer containing mercapto groups by one or more rubber-like polymers containing no mercapto groups and of a similar nature.

2. A thermoplastic molding composition as claimed in claim 1, where the rubber-like polymer particles (component B/b) have an average diameter of from 0.1 to 7 µm.

3. A mixture containing from 80 to 100% by weight of a thermoplastic molding composition as claimed in claim 1 or 2 and from 0 to 20% by weight of a conventional elastomeric block copolymer (component C).

## Revendications

1. Masses à mouler thermoplastiques à base d'oxydes de polyphénylène et de polystyrène modifié dans le sens de la résilience, contenant, comme composants essentiels,
   A) 5 à 95% en poids d'un oxyde de polyphénylène et
   B) 5 à 95% en poids d'une masse polymère modifiée dans le sens de la résilience, obtenue par polymérisation de
      a) 70 à 97 parties en poids de styrène et/ou d'un styrène alkylsubstitué, en présence de
      b) 3 à 30 parties en poids d'un polymère caoutchouteux qui se compose, pour 60 à 100% en poids, d'un ou de plusieurs diènes conjugués et, pour 0 à 40% en poids, d'un ou de plusieurs carbures vinylaromatiques, a un poids moléculaire de 20 000 à 200 000 et contient, par gramme, $5{,}0.10^{-6}$ à $2{,}5.10^{-4}$ mole de groupements thiol qui ont été introduits dans le polymère par

réaction de même type de polymérisation,
jusqu'à 70% en poids de ce polymère contenant des groupements thiol pouvant être remplacés par un polymère caoutchouteux dépourvu de groupements thiol ou par plusieurs polymères caoutchouteux dépourvus de groupements thiol de type analogue.

**2.** Masses à mouler thermoplastiques selon la revendication 1, dans lesquelles les particules de polymère caoutchouteux (composant B/b) ont un diamètre moyen de 0,1 à 7 µm.

**3.** Mélanges contenant de 80 à 100% en poids de masses à mouler thermoplastiques selon la revendication 1 ou 2 et de 0 à 20% en poids d'un caoutchouc séquencé élastomère usuel (composant C).